# EUROPÄISCHE PATENTSCHRIFT

(11) **EP 2 327 608 B1**
(45) Veröffentlichungstag und Bekanntmachung des Hinweises auf die Patenterteilung: **29.06.2016**
(21) Anmeldenummer: 10192236.7
(22) Anmeldetag: 23.11.2010
(51) Int. Cl.: B62D 15/02

(54) **Verfahren und Vorrichtung zur Unterstützung eines Fahrers eines Kraftfahrzeugs**
Method and device to support a driver of a motor vehicle
Procédé et dispositif destinés à assister un conducteur d'un véhicule automobile

(30) Priorität: 30.11.2009 DE 102009047283
(43) Veröffentlichungstag der Anmeldung: 01.06.2011
(73) Patentinhaber: Robert Bosch GmbH, 70442 Stuttgart (DE)
(72) Erfinder: Pampus, Christian, 71229 Leonberg (DE)

(56) Entgegenhaltungen:
- EP-A1- 2 011 699
- WO-A1-2008/055567

## Beschreibung

### Stand der Technik

Die Erfindung geht aus von einem Verfahren zur Unterstützung eines Fahrers eines Kraftfahrzeugs bei einem Einparkvorgang gemäß dem Oberbegriff des Anspruchs 1. Weiterhin betrifft die Erfindung eine Vorrichtung zur Unterstützung eines Fahrers eines Kraftfahrzeugs bei einem Einparkvorgang.

Zur Unterstützung eines Fahrers bei einem Einparkvorgang sind unterschiedliche Systeme bekannt. Diese Systeme unterstützen den Fahrer insbesondere beim Einparken in eine Parallelparklücke. Bei solchen Systemen wird üblicherweise während des Vorbeifahrens an einer Parklücke durch einen seitlich am Fahrzeug angebrachten Sensor der Abstand zu Objekten neben dem Fahrzeug gemessen. Anhand des ermittelten Signalverlaufs wird erkannt, wo sich eine geeignete Parklücke befindet.

Wenn in eine so ermittelte Parklücke eingeparkt wird, übernimmt das System zur Unterstützung des Fahrers des Fahrzeugs beim Einparkvorgang den eigentlichen Lenkvorgang, während der Fahrer nur die Bremse und das Fahrpedal zu betätigen hat. Der Lenkeingriff durch das System erfolgt dabei so, dass das einzuparkende Fahrzeug sowohl an den die Parklücke begrenzenden Objekten vorbeilenkt als auch am Ende parallel zu einer Fahrbahnbegrenzung, zum Beispiel einem Bordstein steht. Alternativ zu Systemen, bei denen der Lenkvorgang vom Fahrzeug übernommen wird, sind auch solche Systeme am Markt, bei denen der Fahrer noch selbst lenken muss, jedoch vom System Hinweise erhält, wie er jeweils zu lenken hat, um in die Parklücke zu gelangen.

Da jedoch nur ein Teil aller Parklücken Parallelparklücken sind, sind weiterhin auch Systeme bekannt, die neben Parallelparklücken auch Querparklücken erkennen. Das Einfahren in eine solche Querparklücke erfolgt dabei vorzugsweise rückwärts. Zu diesem Einparkvorgang soll ebenfalls eine Unterstützung für den Fahrer angeboten werden.

WO 2008/055567 A1 bzw. EP2011699 A1 offenbaren den Oberbegriff des Anspruchs 1 Um den Fahrer beim Einparken unterstützen zu können, ist es daher zunächst erforderlich, dass das System erkennt, ob eine Parallelparklücke oder eine Querparklücke vorliegt. Aus DE-A 10 2005 032 095 ist zum Beispiel ein Verfahren bekannt, bei dem die Ausrichtung eines die Parklücke begrenzenden Fahrzeugs ermittelt wird und aus der Ausrichtung des Fahrzeugs auf die Orientierung der Parklücke geschlossen wird.

Nachteil der bekannten Systeme ist jedoch, dass mit den bekannten Systemen nicht nur Parklücken detektiert werden, sondern auch freie Bereiche, die keine Parklücken darstellen. Ursache hierfür ist insbesondere, dass bei Verwendung von Ultraschallsensoren als Abstandssensoren ein quer geparktes Fahrzeug im Ultraschallbild nicht immer zuverlässig von anderen, beispielsweise runden Objekten, unterschieden werden kann. Zudem kann aufgrund der Tiefe einer Querparklücke ein Bordstein durch den Ultraschallsensor im Allgemeinen nicht detektiert werden und das Erkennen eines solchen somit nicht zur Bedingung für die Existenz einer Querparklücke gemacht werden. Dies führt dazu, dass einzelne Objekte, die im Ultraschallbild einem quer geparkten Fahrzeug ähneln, zur Ausgabe einer Querparklücke ausreichend sind. Hierdurch wird die Qualität der Parklückenanzeige drastisch reduziert.

### Offenbarung der Erfindung

### Vorteile der Erfindung

Beim erfindungsgemäßen Verfahren zur Unterstützung eines Fahrers eines Kraftfahrzeugs wird bei einem Einparkvorgang während der Fahrt die Umgebung des Fahrzeugs erfasst und anhand des erfassten Umgebungsmusters ermittelt, ob eine Parklücke vorliegt und ob die Parklücke eine Parallelparklücke oder Querparklücke ist. Vor Beginn des Einparkvorgangs wird vom Fahrer des Fahrzeugs angegeben, ob die erfasste Parklücke eine Parallelparklücke oder eine Querparklücke ist oder es wird eine Parklücke als Querparklücke erkannt, wenn an mindestens einer Seite der Parklücke ein Objekt detektiert wird und kein weiteres, sich nicht bewegendes Objekt im Bereich der möglichen Parklücke während des Vorbeifahrens erkannt wird.

Das erfindungsgemäße Verfahren erlaubt eine eindeutige Zuordnung, ob eine detektierte Parklücke eine Parallelparklücke oder eine Querparklücke ist.

In der Erfindung erfolgt die Angabe des Fahrers, ob nachfolgend erfasste Parklücken Parallelparklücken oder Querparklücken sind, vor der Auswahl einer geeigneten Parklücke.

Eine Vorauswahl vom Fahrer des Fahrzeuges, ob die im Folgenden gefundenen Parklücken Parallelparklücken oder Querparklücken sind, ist zum Beispiel dann möglich, wenn eine klare Zuordnung der folgenden aufzufindenden Parklücken getroffen werden kann. Dies ist zum Beispiel dann der Fall, wenn eine zu findende Parklücke eine Parklücke am Straßenrand ist. Hierbei handelt es sich im Allgemeinen um Parallelparklücken. Diese sind üblicherweise von einem vorderen Fahrzeug und einem hinteren Fahrzeug in ihrer Längenausdehnung begrenzt. Die seitliche Begrenzung einer solchen Parallelparklücke wird üblicherweise durch einen Bordstein gebildet. Alternativ ist es jedoch auch möglich, dass die seitliche Begrenzung zum Beispiel durch Pflanzen, beispielsweise Hecken oder andere Anpflanzungen, Pfosten, Laternen oder ähnliches Objekte gebildet wird. Auch ist es möglich, dass die seitliche Begrenzung durch eine Mauer, beispielsweise eine Umfriedungsmauer oder auch eine Hauswand gebildet wird.

Ebenso ist eine klare Zuordnung möglich, wenn der zu findende Parkplatz in einem Parkhaus oder auf einem großen Parkplatz erfasst werden soll. Hierbei handelt es sich im Allgemeinen um Querparklücken, sodass auch hier zuvor vom Fahrer eine Auswahl getroffen werden kann, dass im Folgenden Querparklücken gesucht werden sollen. Querparklücken werden üblicherweise seitlich durch weitere parkende Fahrzeuge begrenzt. Insbesondere auf Parkplätzen oder in Parkhäusern ist die vordere Begrenzung einer Querparklücke ein weiteres Fahrzeug in einer parallelen Parkreihe oder auch eine bauliche Begrenzung, zum Beispiel durch Pfosten oder Leitplanken. Auch kann die Begrenzung zum Beispiel durch einen Bordstein gebildet werden. Aufgrund der Tiefe von Querparklücken wird die hintere Begrenzung einer Querparklücke im Allgemeinen während der Vorbeifahrt bei der Erfassung der Umgebung des Fahrzeugs nicht erfasst. Auch ist es möglich, zum Beispiel bei mehreren nebeneinander liegenden freien Parklücken bei Querparklücken oder bei mehreren hintereinander liegenden Parklücken bei Parallelparklücken, dass eine Parklücke nur einseitig begrenzt ist, bei Querparklücken entweder auf der linken Seite oder auf der rechten Seite, bzw. bei Parallelparklücken eine vordere oder eine hintere Begrenzung aufweist. Dies ist auch der Fall bei der jeweils ersten bzw. letzten Parklücke in einer Reihe. In einem solchen Fall, bei dem die Parklücke nur eine einseitige Begrenzung aufweist, ist im Allgemeinen eine Unterstützung für den Fahrer nicht erforderlich, da eine Einfahrt in eine solche Parklücke sehr viel leichter ist als eine Einfahrt in eine Parklücke, die an drei Seiten begrenzt ist.

Die Auswahl durch den Fahrer, ob die im Folgenden erfassten Parklücken Parallelparklücken oder Querparklücken sind, kann zum Beispiel durch Betätigen eines Schalters erfolgen. Auch ist es möglich, die Auswahl durch Betätigen einer Eingabevorrichtung für einen Bordcomputer, beispielsweise einen Multifunktionsschalter, der als Drehschalter oder als Kipp- oder Tastschalter ausgeführt sein kann, durchzuführen.

In einer alternativen Ausführungsform wird eine Parklücke als Querparklücke erkannt, wenn an mindestens einer Seite der Parklücke ein Objekt detektiert wird und kein weiteres sich nicht bewegendes Objekt im Bereich der möglichen Parklücke während des Vorbeifahrens erkannt wird. Auf diese Weise ist ebenfalls eine eindeutige Zuordnung möglich, ob die detektierte Parklücke eine Querparklücke oder eine Längsparklücke ist. Weiterhin hat dies den Vorteil, dass nicht durch den Fahrer des Fahrzeugs vorab vorgegeben werden muss, ob die im Folgenden aufgefundenen Parklücken Parallelparklücken oder Querparklücken sind.

Wenn die Entscheidung, ob die vorgefundene Parklücke eine Querparklücke ist, nur anhand der Kriterien erfolgt, dass die Parklücke an mindestens einer Seite durch ein Objekt begrenzt ist und sich weiterhin kein sich bewegendes Objekt im Bereich der möglichen Parklücke während des Vorbeifahrens erkannt wird, getroffen wird, ist es jedoch auch möglich, dass ein Bereich, in dem sich zwar kein Objekt befindet, der jedoch keine Parklücke ist, als Parklücke erkannt wird. So kann zum Beispiel ein freier Bereich neben der letzten Parklücke bzw. neben der ersten Parklücke in einer Reihe ebenfalls als Parklücke erkannt werden, obwohl es sich nicht mehr um einen freien Parkplatz handelt. Um die Robustheit des Systems zu verbessern und zu vermeiden, dass freie Bereiche, in denen keine Objekte detektiert werden, die jedoch keine Parklücke sind, als Parklücke identifiziert werden, ist es bevorzugt, dass eine Parklücke nur dann als Querparklücke erkannt wird, wenn auf beiden Seiten der Parklücke Objekte detektiert werden, so dass die Parklücke beidseitig begrenzt ist. Durch die beidseitige Begrenzung der Parklücke wird insbesondere vermieden, dass ein Bereich neben dem letzten Fahrzeug bzw. neben dem ersten Fahrzeug in einer Reihe als Parklücke erkannt wird. Auf diese Weise ist es zwar möglich, dass freie Parklücken, die sich jeweils am Ende bzw. am Anfang einer Reihe befinden, nicht detektiert werden, jedoch besteht hier die Möglichkeit für den Fahrer, auf eine Unterstützung beim Einparkvorgang zu verzichten und selbsttätig in eine solche Parklücke einzuparken. So werden durch das Verfahren nicht mehr alle Parklücken erkannt, jedoch ist die Wahrscheinlichkeit, dass ein freier Bereich als Parklücke erkannt wird, der keine Parklücke ist, stark reduziert. Wenn auch eine erste Parklücke in einer Reihe oder eine letzte Parklücke in einer Reihe erkannt werden soll, so ist es möglich, dass eine Parklücke dann als Querparklücke ausgegeben wird, wenn diese eine freie Parklücke am Ende einer Reihe quer geparkter Fahrzeuge darstellt. Hierzu werden die zuvor erfassten Daten entsprechend ausgewertet, um zu erkennen, ob die detektierten Objekte quer geparkte Fahrzeuge sein können. Um zum Beispiel eine freie Parklücke am Anfang einer Parkreihe auszugeben, können ebenfalls die zuvor erfassten Daten eingesetzt werden. Dies ergibt sich zum Beispiel beim Abfahren einer Folge von Parkreihen.

In einer weiteren Ausführungsform der vorliegenden Erfindung wird eine Parklücke dann als Querparklücke erkannt, wenn der Abstand zwischen den zwei detektierten Objekten kleiner ist als der notwendige Abstand für eine Längsparklücke. Durch den Abstand zwischen den zwei detektierten Objekten, der kleiner ist als der notwendige Abstand für eine Längsparklücke wird ein weiteres Kriterium für die Auswahl einer Querparklücke bereitgestellt.

Wenn durch das erfindungsgemäße Verfahren ermittelt werden soll, ob eine detektierte Parklücke eine Parallelparklücke oder eine Querparklücke ist, wird anders als bei Systemen, die nur Längsparklücken detektieren können, eine Parklücke, bei der Abstand zwischen den zwei detektierten Objekten kleiner ist als der notwendige Abstand für eine Längsparklücke zunächst nicht als ungeeignete Parklücke ausgeschlossen. Es wird davon ausgegangen, dass es sich hierbei um eine Querparklücke handeln könnte. Um eine klare Zuordnung zu finden, ob es sich tatsächlich um eine Querparklücke handelt, sind dann weitere Auswahlkriterien zu treffen. So ist erfindungsgemäß insbesondere zu prüfen, ob ein sich nicht bewegendes Objekt im Bereich der möglichen Parklücke erkannt wird. Wenn kein sich nicht bewegendes Objekt erkannt wird, ist mit einer großen Wahrscheinlichkeit davon auszugehen, dass es sich um eine Querparklücke handelt. Wenn ein sich nicht bewegendes Objekt detektiert wird, so ist die Lücke zu verwerfen, da sie sowohl für eine Längsparklücke als auch für eine Querparklücke zu kurz ist.

Um eine Auswahl treffen zu können, ob eine detektierte Lücke eine Längsparklücke oder eine Querparklücke ist, wird eine Parklücke als Parallelparklücke erkannt, wenn während des Vorbeifahrens parallel zum Fahrzeug eine Begrenzung detektiert wird und der Abstand zwischen zwei detektierten Objekten, die eine vordere Begrenzung und eine hintere Begrenzung einer Parallelparklücke bilden, ausreichend groß ist. Zudem muss der Abstand zur Begrenzung parallel zum Fahrzeug ausreichend groß sein, um ein Parken des Fahrzeugs zu ermöglichen. Das heißt, dass die Begrenzung parallel zum Fahrzeug mindestens eine Fahrzeugbreite entfernt vom einzuparkenden Fahrzeug detektiert wird.

Eine solche Begrenzung parallel zum Fahrzeug ist zum Beispiel ein Bordstein. Auch kann eine solche Begrenzung, wie zuvor bereits beschrieben, durch eine oder mehrere Pflanzen gebildet werden, beispielsweise eine Hecke sein, durch Pfosten oder Absperreinrichtungen gebildet werden oder auch eine Mauer, beispielsweise als Grundstücksabgrenzung oder auch eine Hauswand, sein. Im Allgemeinen wird die Begrenzung parallel zum Fahrzeug ein Bordstein sein, da sich Längsparklücken üblicherweise am Fahrbahnrand befinden und im Allgemeinen neben den Parallelparklücken ein Gehsteig ist.

Um die Umgebung des Fahrzeugs zu erfassen, werden üblicherweise Abstandssensoren im Frontbereich und im Heckbereich des Fahrzeugs eingesetzt, wobei mindestens ein Abstandssensor auf jeder Seite des Fahrzeugs den Bereich neben dem Fahrzeug erfasst. Eine Erfassung des Bereichs neben dem Fahrzeug ist insbesondere deshalb notwendig, um zu erkennen, ob sich neben dem Fahrzeug Objekte befinden oder ein freier Raum existiert, der eine Parklücke sein kann. Zur Erfassung der Umgebung können beliebige, dem Fachmann bekannte Sensoren eingesetzt werden. Üblicherweise verwendete Sensoren sind zum Beispiel Ultraschallsensoren, Radarsensoren, Infrarotsensoren, kapazitive Sensoren oder LIDAR-Sensoren. Für das erfindungsgemäße Verfahren werden insbesondere Ultraschallsensoren eingesetzt. Mit den Sensoren wird eine Entfernung zwischen einem Objekt und dem Sensor erfasst. Die Erfassung der Entfernung erfolgt dabei durch die Laufzeit eines Signals, das vom Sensor gesendet wird und dessen Echo vom Sensor wieder empfangen wird. Die so erfassten Daten werden einer geeigneten Auswerteeinheit zugeführt, mit der die Daten ausgewertet werden und so Richtung und Entfernung zu dem Objekt ermittelt werden. Auswerteverfahren, mit denen die Richtung und die Entfernung zum Objekt ermittelt zum Objekt ermittelt werden, sind neben der Laufzeit zur Bestimmung der Entfernung Triangulationsverfahren oder Trilaterationsverfahren zur Richtungsbestimmung. Zur Richtungsbestimmung werden dabei die Daten von mindestens zwei Sensoren verwendet.

Um auszuschließen, dass es sich bei einem erfassten Objekt um ein sich bewegendes Objekt handelt, werden zum Beispiel mehrere aufeinanderfolgende Messungen durchgeführt. Wenn sich die Lage des Objektes bei mindestens zwei aufeinanderfolgenden Messungen verändert, handelt es sich um ein sich bewegendes Objekt. Ein solches sich bewegendes Objekt kann zum Beispiel ein Fußgänger sein, der eine potenzielle Parklücke quert. Wenn ein sich bewegendes Objekt detektiert wird, ist zusätzlich zu überprüfen, ob der Bereich, in dem sich das sich bewegende Objekt befindet, als Parklücke geeignet ist. Hierzu werden nur die Daten ausgewertet, die von sich nicht bewegenden Objekten stammen.

In einer weiteren Ausführungsform ist es auch möglich, dass die manuelle Auswahl durch den Fahrer des Fahrzeugs und die automatische Bewertung einer Parklücke kombiniert werden. Dies kann zum Beispiel derart erfolgen, dass Parklücken zunächst durch das eingesetzte Fahrassistenzsystem zur automatischen Bewertung klassifiziert werden, solange der Fahrer keine manuelle Auswahl getroffen hat. Grundsätzlich ist dem Fahrer durch die Möglichkeit der manuellen Auswahl die Möglichkeit gegeben, das System zu überstimmen. Wenn der Fahrer ausgewählt hat, ob die erfassten Parklücken Parallelparklücken oder Querparklücken sind, werden in der Folge nur noch die vom Fahrer ausgewählten Parklücken, d.h. entweder Querparklücken oder Längsparklücken, angezeigt.

Eine Parklücke kann auch dann als Querparklücke identifiziert werden, wenn nur ein einzelnes Objekt und ein darauf folgender Freiraum detektiert wird und der Fahrer einen Einparkvorgang vorbereitet, indem dieser einen Lenkvorgang von der Parklücke weg durchführt, zum Beispiel das Fahrzeug nach links bewegt, wenn sich die Lücke auf der rechten Seite befindet.

Wenn durch das erfindungsgemäße Verfahren eine Parklücke aufgefunden ist, kann der Fahrer von einem geeigneten System weiterhin beim Einparkvorgang unterstützt werden. Hierzu wird aus den erfassten Daten eine geeignete Einparktrajektorie errechnet, entlang der das Fahrzeug in eine Parklücke einparken kann. Üblicherweise erfolgt der Einparkvorgang dabei sowohl in eine Parallelparklücke als auch in eine Querparklücke rückwärts. Die Trajektorie, entlang der sich das Fahrzeug beim Einparkvorgang bewegt, ist üblicherweise die Bahn, die der Mittelpunkt der Hinterachse zurücklegt.

Die Unterstützung des Fahrers beim Einparken kann sowohl semi-automatisch als auch vollautomatisch erfolgen. Bei einem semi-automatischen System wird nur die jeweils notwendige Lenkeinstellung vom System vorgegeben. Hierzu ist es einerseits möglich, dass dem Fahrer über eine geeignete Anzeigevorrichtung notwendige Lenkwinkel angezeigt werden und der Fahrer selbsttätig die entsprechenden Lenkwinkel durch Betätigung des Lenkrads einstellen muss. Die Anzeige kann zum Beispiel optisch in einer geeigneten Anzeigevorrichtung, beispielsweise einem Monitor eines Bordcomputers erfolgen. Auch ist eine Darstellung durch Pfeile möglich, wobei zum Beispiel das Lenkrad so lange in Pfeilrichtung zu drehen ist, solange der jeweilige Pfeil dargestellt wird. Zusätzlich oder alternativ ist es zum Beispiel auch möglich, dem Fahrer eine haptische Information bezüglich des jeweilig einzustellenden Lenkradwinkels zu geben. Dies kann zum Beispiel durch eine Vibration am Lenkrad oder durch Aufbringen eines zusätzlichen Momentes, das eine Erleichterung oder eine Erschwernis beim Lenken liefert, erfolgen.

Alternativ ist es auch möglich, dass durch Verwendung eines geeigneten Stellantriebs die Lenkung vom Fahrzeug selbsttätig vorgenommen wird. Hierzu wird der Stellantrieb von der Auswerteeinheit, die in diesem Fall gleichzeitig als Steuergerät dient, angesteuert, und die jeweils notwendigen Lenkwinkel werden eingestellt. Neben der Verwendung der Auswerteeinheit als Steuergerät ist alternativ auch ein von der Auswerteeinheit separates Steuergerät einsetzbar, wobei dieses dann die entsprechenden Daten von der Auswerteeinheit erhält. Die Längsführung des Fahrzeugs, das heißt Bremsvorgänge und Beschleunigungsvorgänge werden bei den semi-automatischen Verfahren vom Fahrer selbst übernommen.

Bei einem vollautomatischen System übernimmt das Fahrzeug auch die Längsführung, das heißt das Bremsen und Beschleunigen des Fahrzeugs.

Eine erfindungsgemäße Vorrichtung zur Unterstützung eines Fahrers eines Kraftfahrzeugs bei einem Einparkvorgang umfasst Abstandssensoren mit denen der Abstand zu Objekten in der Umgebung des Fahrzeugs erfasst werden kann, sowie eine Auswerteinheit zur Ermittlung, ob eine erfasste Parklücke eine Querparklücke oder eine Parallelparklücke ist mit dem vorstehend beschriebenen Verfahren. Um abschätzen zu können, ob es sich bei einer erfassten Parklücke um eine Querparklücke oder eine Parallelparklücke handelt, ist einerseits vorgesehen, dass ein entsprechender Schalter vom Fahrer betätigt wird. Dieses Signal wird an die Auswerteeinheit übergeben, sodass der Auswerteeinheit eindeutig mitgeteilt wird, dass es sich bei aufgefundenen Parklücken entweder um Querparklücken oder um Längsparklücken handelt.

Alternativ läuft in der Auswerteeinheit ein Computerprogramm ab, mit dessen Hilfe die von den Abstandssensoren erfassten Daten ausgewertet werden, so dass eine Parklücke als Querparklücke erkannt wird, wenn diese mindestens an einer Seite durch ein Objekt begrenzt wird und sich kein weiteres, sich nicht bewegendes Objekt im Bereich der möglichen Parklücke befindet. Insbesondere ist das auf der Auswerteeinheit ablaufende Computerprogramm so gestaltet, dass eine Querparklücke nur dann als solche detektiert wird, wenn auf beiden Seiten der Parklücke Objekte detektiert werden, so dass die Parklücke beidseitig begrenzt ist. In einer bevorzugten Ausführungsform wird eine Parklücke weiterhin nur dann als Querparklücke erkannt, wenn der Abstand zwischen den zwei detektierten Objekten kleiner ist als der notwendige Abstand für eine Längsparklücke.

Die erfassten Daten, anhand derer durch die Auswerteeinheit erfasst wird, ob es sich um eine Parklücke und dann weiterhin ob es sich um eine Parallelparklücke oder eine Querparklücke handelt, erfolgt durch die von den Abstandssensoren erfassten Abstände zu Objekten. Durch Messung mit den Abstandssensoren werden jeweils Punkte in der Umgebung des Sensors erfasst, die ein Signal reflektieren. Anhand des Signalverlaufs, der sich aus der Laufzeit der Signale vom Senden bis zum Empfang des Echos ergibt, kann die Umgebung dargestellt werden. Die jeweils erfassten Daten werden zum Beispiel in geeigneten Datenarrays abgelegt, so dass auf diese zur weiteren Auswertung zur Erfassung von Parklücken zurückgegriffen werden kann.

Als Abstandssensoren können geeignete Sensoren, die dem Fachmann bekannt sind, eingesetzt werden. Wie zuvor bereits beschrieben, eignen sich zum Beispiel Ultraschallsensoren, Radarsensoren, Infrarotsensoren, kapazitive Sensoren und LIDAR-Sensoren. Insbesondere werden Ultraschallsensoren verwendet.

## Patentansprüche

1. Verfahren zur Unterstützung eines Fahrers eines Kraftfahrzeugs bei einem Einparkvorgang, wobei
die Umgebung des Fahrzeugs während der Fahrt erfasst wird und
anhand des erfassten Umgebungsmusters ermittelt wird, ob eine Parklücke vorliegt und
die Parklücke eine Parallelparklücke oder eine Querparklücke ist,
**dadurch gekennzeichnet, dass**
vom Fahrer des Fahrzeugs vor Beginn des Einparkvorgangs angegeben wird, ob die erfasste Parklücke eine Parallelparklücke oder eine Querparklücke ist, und
dass
eine Parklücke als Querparklücke erkannt wird, wenn an mindestens einer Seite der Parklücke ein Objekt detektiert wird und kein weiteres, sich nicht bewegendes Objekt im Bereich der möglichen Parklücke während des Vorbeifahrens erkannt wird, und dass
eine Parklücke als Querparklücke oder als Parallelparklücke erkannt wird, wenn diese am Ende einer Reihe quer geparkter beziehungsweise am Ende einer Reihe längs geparkter Fahrzeuge erfasst wird.

2. Verfahren gemäß Anspruch 1, **dadurch gekennzeichnet, dass** die Angabe des Fahrers, ob die nachfolgend erfassten Parklücken Parallelparklücken oder Querparklücken sind, vor der Auswahl einer geeigneten Parklücke erfolgt.

3. Verfahren gemäß Anspruch 1 oder 2, **dadurch gekennzeichnet, dass** eine Parklücke nur dann als Querparklücke erkannt wird, wenn auf beiden Seiten der Parklücke Objekte detektiert werden, so dass diese beidseitig begrenzt ist.

4. Verfahren gemäß Anspruch 3, **dadurch gekennzeichnet, dass** die Parklücke als Querparklücke erkannt wird, wenn der Abstand zwischen den zwei detektierten Objekten kleiner ist als der notwendige Abstand für eine Parallelparklücke.

5. Verfahren gemäß einem der Ansprüche 1 bis 4, **dadurch gekennzeichnet, dass** eine Parklücke als Parallelparklücke erkannt wird, wenn während des Vorbeifahrens parallel zum Fahrzeug eine Begrenzung detektiert wird und der Abstand zwischen zwei detektierten Objekten ausreichend groß ist.

6. Verfahren gemäß einem der Ansprüche 1 bis 5, **dadurch gekennzeichnet, dass** eine freie Parklücke am Anfang einer Parkreihe als Querparklücke oder als Parallelparklücke erfasst wird, wenn zuvor erfasste Parkplätze in Parkreihen als Querparkplätze bzw. als Parallelparkplätze erfasst wurden.

7. Verfahren gemäß einem der Ansprüche 1 bis 6, **dadurch gekennzeichnet, dass** ein automatisches Erkennen von Querparklücken oder Parallelparklücken erfolgt, solange keine manuelle Auswahl des Fahrers erfolgt ist.

8. Verfahren gemäß einem der Ansprüche 1 bis 7, **dadurch gekennzeichnet, dass** eine Parklücke als Querparklücke erfasst wird, wenn ein einzelnes Objekt und ein darauf folgender Freiraum detektiert werden und der Fahrer einen Einparkvorgang vorbereitet, indem er seinen Lenkvorgang vom erfassten Freiraum weg durchführt.

9. Verfahren gemäß einem der Ansprüche 1 bis 8, **dadurch gekennzeichnet, dass** zur Erfassung der Umgebung des Fahrzeugs Abstandssensoren im Frontbereich und im Heckbereich des Fahrzeugs eingesetzt werden, wobei mindestens ein Abstandssensor auf jeder Seite des Fahrzeugs den Bereich neben dem Fahrzeug erfasst.

10. Vorrichtung zur Unterstützung eines Fahrers eines Kraftfahrzeugs bei einem Einparkvorgang, Abstandssensoren umfassend, mit denen der Abstand zu Objekten in der Umgebung des Fahrzeugs erfasst werden kann, sowie eine Auswerteeinheit zur Ermittlung, ob eine erfasste Parklücke eine Querparklücke oder eine Parallelparklücke ist mit einem Verfahren gemäß einem der Ansprüche 1 bis 9.

## Claims

1. Method for assisting a driver of a motor vehicle in a parking manoeuvre, wherein
the surroundings of the vehicle are registered during the journey and
the registered surroundings pattern is taken as a basis for ascertaining whether there is a parking space and the parking space is a parallel parking space or a perpendicular parking space,
**characterized in that**
before the beginning of the parking manoeuvre, the driver of the vehicle indicates whether the registered parking space is a parallel parking space or a perpendicular parking space, and
**in that**
a parking space is identified as a perpendicular parking space if an object is detected on at least one side of the parking space and no further, non-moving object is identified in the region of the possible parking space as the motor vehicle travels past, and **in that**
a parking space is identified as a perpendicular parking space or as a parallel parking space if said parking space is registered at the end of a row of vehicles parked perpendicularly or at the end of row of vehicles parked parallel.

2. Method according to Claim 1, **characterized in that** the indication by the driver as to whether the subsequently registered parking spaces are parallel parking spaces or perpendicular parking spaces is effected before selection of a suitable parking space.

3. Method according to Claim 1 or 2, **characterized in that** a parking space is identified as a perpendicular parking space only if objects are detected on both sides of the parking space, so that said parking space is bounded on both sides.

4. Method according to Claim 3, **characterized in that** the parking space is identified as a perpendicular parking space if the distance between the two detected objects is shorter than the necessary distance for a parallel parking space.

5. Method according to one of Claims 1 to 4, **characterized in that** a parking space is identified as a parallel parking space if, as the motor vehicle travels past, a boundary is detected parallel to the vehicle and the distance between two detected objects is sufficiently great.

6. Method according to one of Claims 1 to 5, **characterized in that** a free parking space at the start of a parking row is registered as a perpendicular parking space or as a parallel parking space if previously registered parking spaces in parking rows have been registered as perpendicular parking spaces or as parallel parking spaces.

7. Method according to one of Claims 1 to 6, **characterized in that** automatic identification of perpendicular parking spaces or parallel parking spaces is effected while no manual selection by the driver has been effected.

8. Method according to one of Claims 1 to 7, **characterized in that** a parking space is registered as a perpendicular parking space if a single object and a subsequent free space are detected and the driver prepares for a parking manoeuvre by making his steering manoeuvre away from the registered free space.

9. Method according to one of Claims 1 to 8, **characterized in that** the surroundings of the vehicle are registered by using distance sensors at the front and at the rear of the vehicle, at least one distance sensor on each side of the vehicle registering the area next to the vehicle.

10. Apparatus for assisting a driver of a motor vehicle in a parking manoeuvre, comprising distance sensors that can be used to register the distance from objects in the surroundings of the vehicle and also an evaluation unit for ascertaining whether a registered parking space is a perpendicular parking space or a parallel parking space using a method according to one of Claims 1 to 9.

## Revendications

1. Procédé d'assistance d'un conducteur d'un véhicule automobile lors d'une manoeuvre d'entrée en stationnement, selon lequel
l'environnement du véhicule est détecté pendant le parcours et
la présence ou non d'un emplacement de stationnement est déterminée au moyen du modèle d'environnement détecté et
l'emplacement de stationnement est un emplacement de stationnement parallèle ou un emplacement de stationnement transversal,
**caractérisé en ce que**
avant le début de la manoeuvre d'entrée en stationnement, le conducteur du véhicule indique si l'emplacement de stationnement détecté est un emplacement de stationnement parallèle ou un emplacement de stationnement transversal, et **en ce que** un emplacement de stationnement est reconnu comme un emplacement de stationnement transversal lorsqu'un objet est détecté sur au moins un côté de l'emplacement de stationnement et aucun autre objet mobile n'est reconnu dans la zone de l'emplacement de stationnement possible pendant le passage à côté, et **en ce que** un emplacement de stationnement est reconnu comme un emplacement de stationnement transversal ou un emplacement de stationnement parallèle lorsque celui-ci est détecté à la fin d'une rangée de véhicules stationnés transversalement ou à la fin d'une rangée de véhicules stationnés longitudinalement.

2. Procédé selon la revendication 1, **caractérisé en ce que** l'indication par le conducteur révélant si les prochains emplacements de stationnement détectés sont des emplacements de stationnement parallèles ou des emplacements de stationnement transversaux a lieu avant la sélection d'un emplacement de stationnement approprié.

3. Procédé selon la revendication 1 ou 2, **caractérisé en ce qu'**un emplacement de stationnement n'est reconnu comme un emplacement de stationnement transversal que si des objets sont détectés des deux côtés de l'emplacement de stationnement, de sorte que celui-ci est délimité des deux côtés.

4. Procédé selon la revendication 3, **caractérisé en ce que** l'emplacement de stationnement est reconnu comme un emplacement de stationnement transversal lorsque l'écart entre les deux objets détectés est inférieur à l'écart nécessaire pour un stationnement transversal parallèle.

5. Procédé selon l'une des revendications 1 à 4, **caractérisé en ce qu'**un emplacement de stationnement est reconnu comme un emplacement de stationnement parallèle lorsqu'une délimitation est détectée parallèlement au véhicule pendant le passage à côté et l'écart entre deux objets détectés est suffisamment grand.

6. Procédé selon l'une des revendications 1 à 5, **caractérisé en ce qu'**un emplacement de stationnement libre au début d'une rangée de stationnement est détecté en tant qu'emplacement de stationnement transversal ou emplacement de stationnement parallèle lorsque les emplacements de stationnement détectés précédemment dans les rangées de stationnement ont été détectés en tant qu'emplacements de stationnement transversaux ou emplacements de stationnement parallèles.

7. Procédé selon l'une des revendications 1 à 6, **caractérisé en ce qu'**une reconnaissance automatique des emplacements de stationnement transversaux ou des emplacements de stationnement parallèles est effectuée tant qu'aucune sélection manuelle du conducteur n'a eu lieu.

8. Procédé selon l'une des revendications 1 à 7, **caractérisé en ce qu'**un emplacement de stationnement est détecté en tant qu'emplacement de stationnement transversal lorsqu'un objet unique et un espace libre qui suit celui-ci sont détectés et le conducteur prépare une manoeuvre d'entrée en stationnement **en ce qu'**il exécute son opération de conduite dans le sens de l'éloignement de l'espace libre détecté.

9. Procédé selon l'une des revendications 1 à 8, **caractérisé en ce que** des capteurs de distance sont utilisés dans la zone avant et dans la zone arrière du véhicule pour détecter l'environnement du véhicule, au moins un capteur de distance de chaque côté du véhicule détectant la zone à côté du véhicule.

10. Dispositif d'assistance d'un conducteur d'un véhicule automobile lors d'une manoeuvre d'entrée en stationnement, comprenant des capteurs de distance avec lesquels peut être détecté l'écart par rapport à des objets dans l'environnement du véhicule, ainsi qu'une unité d'interprétation destinée à déterminer si un emplacement de stationnement détecté est un emplacement de stationnement transversal ou un emplacement de stationnement parallèle avec un procédé selon l'une des revendications 1 à 9.
